# EUROPÄISCHE PATENTSCHRIFT

(11) **EP 3 772 272 B1**
(45) Veröffentlichungstag und Bekanntmachung des Hinweises auf die Patenterteilung: **04.10.2023**
(21) Anmeldenummer: 19190573.6
(22) Anmeldetag: 07.08.2019
(51) Int. Cl.: A01G 13/10

(54) **PFLANZEN- UND BODENSCHUTZVORRICHTUNG**
PLANT AND SOIL PROTECTION DEVICE
DISPOSITIF DE PROTECTION DES PLANTES ET DU SOL

(43) Veröffentlichungstag der Anmeldung: 10.02.2021
(73) Patentinhaber: PLAN.Maraia, 8045 Zürich (CH)
(72) Erfinder: MARAIA, Fabrizio, 8045 Zürich (CH)
(74) Vertreter: Pestalozzi, Deborah

(56) Entgegenhaltungen:
- DE-A1-102012 004 324
- GB-A- 782 115
- JP-A- 2008 259 461
- US-A1- 2019 029 190
- US-B2- 9 578 813

## Beschreibung

### TECHNISCHES GEBIET

Die vorliegende Erfindung betrifft eine gitterförmige Schutzvorrichtung zum Schutz einer bepflanzten oder unbepflanzten Bodenfläche vor Betretung oder Beschmutzung durch Tiere oder Personen.

### STAND DER TECHNIK

Das Problem, dass Tiere die Züchtung von jungen Pflanzen stören, indem sie junge Triebe entweder zertreten oder fressen, ist seit langem bekannt. Ebenso soll vermieden werden, dass Tiere, insbesondere Kleintiere, wie beispielsweise Katzen, kleine Hunde, Marder oder Füchse, bestimmte Stellen eines bepflanzten oder unbepflanzten Bodens betreten und dort Löcher graben, urinieren oder koten. Beispielsweise neigen Katzen dazu, immer an den gleichen Stellen einer Rasenfläche, eines Kiesplatzes oder eines Sandkastens oder auf Gemüsebeeten zu urinieren oder zu koten. Dazu sind beispielsweise Geräte mit Ultraschallfunktion bekannt, welche einen für Menschen nicht hörbaren Hochfrequenzton abgeben, der die Tiere von einem bestimmten Bodenabschnitt weghalten soll, da sie den Ton als unangenehm empfinden. Aber nicht nur Tiere, auch Personen sollen am Betreten der zu schützenden Bodenfläche gehindert werden. Mechanische Abwehrvorrichtungen sind beispielsweise mit Dornen versehene Netze, wie aus der EP 1 647 342 oder aus der CN 203505410 U bekannt. Solche Netze können beispielsweise mittels nach unten gerichteten Stäben im Boden fixiert werden, wie in der EP 0 588 604 offenbart. Die Gitter können verschiedene Formen annehmen, wie z.B. in der JP 2003-61554 oder in der JP 2010-166893 offenbart. Jedoch ist es, wenn die Gitter einmal aufgebaut sind, nicht möglich, die Form nachträglich noch zu verändern. Die WO 00/78137 A1 offenbart zu diesem Zweck mittels ringförmigen Verbindungselementen zusammensteckbare Platten mit hochragenden Spitzelementen zur Abwehr von bzw. zum Schutz vor Tieren. Die JP 2008-259461 offenbart Stäbe, welche an Konnektorelementen verschraubt werden können. Die GB 782,115 offenbart ein modular erweiterbares, faltbares Pflanzenschutzgerüst mit bogenförmigen Stäben, welche mittels Rohrhülsen miteinander verbindbar sind. Ein Verbindungsgelement für Stäbe ist in der US 9,578,813 offenbart, wo die radialen Stäbe eines Sonnenschirms in einem zentralen Verbindungselement in rohrhülsenförmigen Ausnehmungen zusammenlaufen.

### DARSTELLUNG DER ERFINDUNG

Es ist eine Aufgabe der Erfindung, eine Schutzvorrichtung gegen Tiere und Personen auf einem Bodenstück bereitzustellen, welche einfach aufbaubar ist, und deren Form auch nachträglich und auf einfache Weise an eine ändernde Grösse der zu überdeckenden Bodenfläche oder an sich ändernde Bepflanzungsbedingungen, wie z.B. wachsendem Gemüse auf einem Gemüsebeet, wachsenden Blumen oder Bäumen, oder auswuchernden Büschen, angepasst werden kann, ohne die bestehende Schutzvorrichtung zu entfernen. Dabei soll die Gesundheit des Tieres oder des Menschen aber nicht gefährdet werden, d.h. die Abwehrvorrichtung soll keine Verletzungen an Tier oder Mensch verursachen.

Diese Aufgabe wird durch den Gegenstand von Anspruch 1 und Anspruch 3 gelöst.

Die vorliegende Erfindung betrifft eine Vorrichtung zum Schutz eines Bodenabschnittes gegen Tiere oder Personen, bzw. gegen das Betreten des Bodenabschnittes durch Tiere oder Personen, aufweisend ein Gitter aus einer Vielzahl von in einer ersten, oberen Ebene angeordneten stabförmigen Elementen. Die erste, obere Ebene bzw. Gitterebene, ist im Wesentlichen parallel zur einer sich im Wesentlichen entlang einer Bodenoberfläche des Bodenabschnittes ausdehnenden zweiten, unteren Ebene angeordnet, und von dieser zweiten, unteren Ebene entlang einer ersten vertikalen Richtung beabstandet. Das Gitter weist eine erste Reihe von parallel zueinander angeordneten stabförmigen Elementen auf, welche jeweils eine erste Längsachse aufweisen und sich in einer ersten horizontalen Richtung erstrecken. Das Gitter weist zudem eine zweite Reihe von parallel zueinander angeordneten stabförmigen Elementen auf, welche jeweils eine zweite Längsachse aufweisen und sich in einer zweiten horizontalen Richtung erstrecken. Dabei ist die zweite horizontale Richtung, bzw. die zweite Reihe, im Wesentlichen rechtwinklig zur ersten horizontalen Richtung bzw. zur ersten Reihe, angeordnet. Die erste horizontale Richtung und die zweite horizontale Richtung sind beide in der ersten Ebene angeordnet. Ferner weist die Schutzvorrichtung mindestens ein Stützelement zur Abstützung des Gitters auf der Bodenoberfläche oder zur Verankerung der Schutzvorrichtung im betreffenden Bodenabschnitt auf. Jedes Stützelement weist ein erstes, oberes Ende und ein zweites, unteres Ende auf. Das mindestens eine Stützelement erstreckt sich mit einer dritten Längsachse in einer zweiten vertikalen Richtung von der ersten Ebene weg zur zweiten Ebene der Bodenoberfläche hin, welche sich im Wesentlichen rechtwinklig zur ersten Ebene erstreckt. Erfindungsgemäss weist die Schutzvorrichtung ferner mindestens ein Verbindungselement auf, welches an mindestens einem Kontakt- oder Kreuzungspunkt eines ersten stabförmigen Elements der ersten Reihe mit einem ersten stabförmigen Element der zweiten Reihe des Gitters angeordnet ist. Die Bezeichnung Kontakt- oder Kreuzungspunkt wird für den Zweck dieser Beschreibung nicht nur verwendet, wenn sich zwei stabförmige Elemente berühren oder kreuzen, sondern auch wenn diese zwei nur durch das Verbindungselement an ihren Enden fixiert werden, sich dabei aber nicht berühren oder kreuzen. Bei den erfindungsgemässen Ausführungsformen handelt es sich aber jeweils um Kreuzungspunkte. Wenn sich das Verbindungselement am Rand des Gitters befindet, so kann das Gitter bei Bedarf an dieser Stelle durch Anlegen weiterer stabförmiger Elemente erweitert werden.

Gemäss einer bevorzugten Ausführungsform weist das Verbindungselement einen oberen Abschnitt und einen unteren Abschnitt auf.

Die Schutzvorrichtung weist vorzugsweise eine Vielzahl von Stützelementen auf. Das Stützelement ist vorzugsweise an einem der Verbindungselemente, vorzugsweise am oder im unteren Abschnitt des betreffenden Verbindungselements befestigt. Vorzugsweise ist jedes der Stützelemente an jeweils einem der Verbindungselemente befestigt, und vorzugsweise ist an jedem Verbindungselement ein Stützelement befestigt. Vorzugsweise ist das Stützelement einstückig am Verbindungselement angeformt, z.B. mittels Spritzgussverfahren. Alternativ kann das Stützelement lösbar am Verbindungselement befestigt sein, indem das Verbindungselement beispielsweise eine nach unten hin offene, dritte, Ausnehmung bzw. ein Sackloch, zur Aufnahme des oberen Endes des Stützelements aufweist, im Sinne einer Steckverbindung oder eine Vorrichtung für eine Rastverbindung aufweist. Das Verbindungselement kann somit auch derart ausgestaltet sein, dass es auf das Stützelement aufgesteckt und/oder auf sonstige Weise daran fixiert werden kann.

Die Länge des Stützelements beträgt jeweils vorzugsweise 5-30 cm, insbesondere bevorzugt 15-25 cm, wobei davon vorzugsweise 5-10 cm in den Erdbereich bzw. in den Boden hineinragen. Der Abstand der unteren zweiten Ebene an der Bodenoberfläche zur ersten, oberen Ebene des Gitters beträgt vorzugsweise 10-20, insbesondere ca. 15 cm. Je nach der Art des fernzuhaltenden Tieres kann auch diese Höhe individuell angepasst werden. Je nach Unebenheit des Bodens können in einer Schutzvorrichtung auch Stützelemente mit unterschiedlichen Längen verwendet werden, damit das Gitter eine möglichst ebene Ausdehnung hat. Das Stützelement kann gemäss einer bevorzugten Variante der Schutzvorrichtung bzw. des Verbindungselements zum unteren Ende hin konisch leicht zulaufend bzw. gar mit einer Spitze ausgebildet sein, um das Einstecken in den Boden zu erleichtern, was insbesondere im Falle einer härteren Bodenbeschaffenheit von Vorteil ist. Der Durchmesser des Stützelements am oberen Ende beträgt vorzugsweise 0.3-1.5 cm, vorzugsweise 0.5-1 cm, und nimmt vorzugsweise zum unteren Ende hin ab, auf ca. 0.2 cm.

Das Verbindungselement weist jeweils eine erste Ausnehmung auf, zur Aufnahme eines stabförmigen Elements der ersten Reihe und eine zweite Ausnehmung zur Aufnahme eines stabförmigen Elements der zweiten Reihe.

Gemäss einer ersten Ausführungsform der Erfindung ist die erste Ausnehmung als ein Kanal entlang der ersten Längsachse des ersten stabförmigen Elements ausgebildet, bzw. verläuft entlang dessen erster Längsachse. Die zweite Ausnehmung ist in dieser Ausführungsform als ein Kanal entlang der zweiten Längsachse des zweiten stabförmigen Elements ausgebildet. Der Kanal kann dabei nach oben hin offen ausgebildet sein, oder geschlossen bzw. röhren-/hülsenförmig. Die Längsachse des ersten Kanals ist somit rechtwinklig zur Längsachse des zweiten Kanals angeordnet, und es ergibt sich eine kreuzförmige Anordnung der Kanäle im Querschnitt parallel zur ersten, oberen Ebene bzw. in einer Draufsicht. Die erste Ausnehmung weist somit vorzugsweise eine axiale Ausdehnung auf, welche rechtwinklig zur axialen Ausdehnung der zweiten Ausnehmung angeordnet ist.

Es ist besonders vorteilhaft, wenn an jedem Kreuzungspunkt des Gitters, d.h. wo jeweils eines der stabförmigen Elemente der ersten Reihe sich mit einem der stabförmigen Elemente der zweiten Reihe des Gitters kreuzt, ein Verbindungselement und vorzugsweise auch mit dem Verbindungselement verbundenes bzw. am Verbindungselement befestigtes Stützelement angeordnet ist.

Je nach Grösse und Gewicht des Gitters und der Stablänge, und je nach Grösse der gewünschten Abstände bzw. Maschenweite des Gitters kann die Anzahl von Verbindungselementen und Stützelementen angepasst werden.

Die Dicke bzw. der Aussendurchmesser der stabförmigen Elemente beträgt vorzugsweise jeweils 0.2-1 cm, insbesondere bevorzugt 0.3-0.7 cm, am meisten bevorzugt ca. 0.5 cm Die Länge jedes einzelnen stabförmigen Elements beträgt vorzugsweise 5-30 cm, insbesondere bevorzugt 15-25 cm. Der Abstand zwischen zwei Kontakt- oder Kreuzungspunkten des Gitters entspricht vorzugsweise im Wesentlichen einer einfachen oder doppelten Länge eines der stabförmigen Elemente. Es können aber auch längere und kürzere stabförmige Elemente miteinander kombiniert bzw. axial miteinander werden und das Gitter kann somit grössere und kleinere Maschen aufweisen.

Vorzugsweise ist an jedem, oder im Wesentlichen an jedem zweiten Kontakt- oder Kreuzungspunkt der stabförmigen Elemente ein Verbindungselement mit Stützelement angeordnet.

Eine besonders bevorzugte Ausführungsform ist dadurch gekennzeichnet, dass zwei stabförmige Elemente entlang ihrer Längsachse durch jeweils ein Kupplungselement miteinander verbunden sind. Ein solches Kupplungselement ist vorzugsweise rohrhülsenförmig ausgebildet und weist eine axiale Durchgangsöffnung auf, auf der einen Seite zur Aufnahme eines ersten Endes eines ersten stabförmigen Elements und auf der anderen Seite zur Aufnahme eines zweiten Endes eines zum ersten stabförmigen Element axial benachbarten zweiten stabförmigen Elements. Das Vorhandensein von Kupplungselementen ist unabhängig vom Typ des gewählten Verbindungselements. Dabei weist das Kupplungselement vorzugsweise eine Längsachse auf, welche im Falle einer Verbindung von zwei stabförmigen Elementen der ersten Reihe jeweils entlang der ersten Längsachse und im Falle einer Verbindung von zwei stabförmigen Elementen der zweiten Reihe jeweils entlang der zweiten Längsachse angeordnet ist, d.h. koaxial mit den jeweiligen beiden im Kupplungselement aufgenommenen stabförmigen Elementen.

Die Länge der allfällig vorhandenen Kupplungselemente beträgt vorzugsweise jeweils 1-5 cm, insbesondere bevorzugt 2-3 cm. Dabei wird jedes betreffende stabförmige Element bis zu einer Tiefe, welche der Hälfte der Länge des Kupplungselements entspricht, in das Kupplungselement eingeführt. D.h. vorzugsweise berühren sich zwei axial benachbarte stabförmige Elemente in der Mitte des jeweiligen Kupplungselements mit ihren jeweiligen Endflächen. Der Aussendurchmesser eines Kupplungselements beträgt 0.3-1 cm, insbesondere bevorzugt 0.5-0.8 cm, und am meisten bevorzugt ca. 0.7 cm. Bei geeigneter Manteldicke erlauben die Kupplungselemente eine Aufnahme bzw. ein vorzugsweise reibfestes Einstecken von zwei axial benachbarten stabförmigen Elementen.

Gemäss einer alternativen, nicht beanspruchten Ausführungsform weist das Verbindungselement fünf Ausnehmungen in Form von Aufnahmehülsen auf, jeweils zwei zur Aufnahme von zwei axial benachbarten stabförmigen Elementen der ersten Reihe und jeweils zwei zur Aufnahme von zwei axial benachbarten stabförmigen Elementen der zweiten Reihe, und eine Aufnahmehülse zur Aufnahme des oberen Endes eines Stützelements. Die fünf Aufnahmehülsen sind dabei jeweils rechtwinklig zueinander angeordnet, wobei vier der fünf Aufnahmehülsen mit ihren Längsachsen in der ersten, oberen Ebene angeordnet sind und eine der fünf Aufnahmehülsen, nämlich jene, welche zur Aufnahme des oberen Endes des Stützelements dient, sich mit ihrer Längsachse entlang der zweiten vertikalen Richtung von der ersten, oberen Ebene weg zur zweiten, unteren Ebene hin im Wesentlichen rechtwinklig zur ersten Ebene erstreckt. Befindet sich ein solches Verbindungselement am Rand, so bleibt vorläufig i.d.R. eine Aufnahmehülse leer, und befindet sich ein solches Verbindungselement an einer Ecke, so bleiben zwei Aufnahmehülsen vorläufig leer, bis zum Anstecken weiterer stabförmiger Elemente. Wird das Gitter nachträglich ergänzt, können hier weitere stabförmige Elemente eingesetzt werden.

Es wäre als Variante dieser nicht beanspruchten Ausführungsform auch denkbar, dass an den Rändern - bis zu einer gewünschten Vergrösserung, besonders ausgestaltete Verbindungselemente, z.B. in Draufsicht in T-Form mit drei Aufnahmehülsen und einer weiteren Aufnahmehülse für das Stützelement, oder an den Ecken besonders ausgestaltete Verbindungselemente in Draufsicht in L-Form mit nur zwei Aufnahmehülsen und einer weiteren Aufnahmehülse für das Stützelement angeordnet sind. Diese weisen keine "freien" Aufnahmehülsen auf, lassen sich aber im Falle einer gewünschten Flächenvergrösserung durch kreuzförmige Verbindungselemente mit vier Aufnahmehülsen und einer weiteren Aufnahmehülse für das Stützelement, wie oben beschrieben, ersetzen. Vorzugsweise sind die Verbindungselemente dieser nicht beanspruchten Ausführungsform derart ausgebildet, dass die einzelnen Aufnahmehülsen bzw. deren Innenräume ineinander übergehen. Dadurch finden die darin eingesteckten stabförmigen Elemente einen Anschlag am axial benachbarten oder senkrecht dazu eingesteckten stabförmigen Element. Alternativ dazu sind die Aufnahmehülsen zum Kontakt- bzw. Kreuzungspunkt hin konisch zulaufend ausgebildet, dass die jeweils eingesteckten stabförmigen Elemente jeweils formschlüssig oder reibschlüssig in der Aufnahmehülse befestigt sind.

Der Aussendurchmesser der Aufnahmehülsen in dieser Ausführungsform beträgt vorzugsweise 0.2-1 cm, insbesondere bevorzugt 0.3-0.8 cm, am meisten bevorzugt 0.5-0-7 cm. Bei der soeben beschriebenen nicht beanspruchten Ausführungsform handelt es sich somit um eine Steckverbindung der stabförmigen Elemente mit den Verbindungselementen.

Gemäss einer weiteren bevorzugten Variante der ersten Ausführungsform sind der obere Abschnitt und der untere Abschnitt des Verbindungselements jeweils scheibenförmig ausgebildet. Im oberen Abschnitt sind in der ersten Ausführungsform zwei Ausnehmungen angeordnet, welche in Form eines ersten, nach oben hin offenen Kanals für die Aufnahme eines ersten stabförmigen Elements und in Form eines zweiten, rechtwinklig zum ersten Kanal angeordneten, nach oben hin offenen Kanals für die Aufnahme eines zweiten stabförmigen Elements ausgebildet sind. Die Kanäle sind somit mit ihrer jeweiligen Längsachse entlang der ersten horizontalen Richtung bzw. entlang der zweiten horizontalen Richtung des Gitters ausgebildet, und in oder parallel zur oberen, ersten Ebene bzw. in der Gitterebene angeordnet. Hier werden die stabförmigen Elemente somit in die entsprechenden Kanäle eingelegt und erstrecken sich in der Gitterebene über das Verbindungselement bzw. über dessen Durchmesser hinaus. In dieser Ausführungsform beträgt der Durchmesser der Scheibe des oberen Abschnittes des Verbindungselements 1-4 cm, vorzugsweise 2-3 cm.

Die stabförmigen Elemente überlagern bzw. überschneiden sich in dieser bevorzugten Ausführungsform im Verbindungselement. Dazu ist einer der Kanäle dahingehend tiefer als der andere, dass der weniger tiefe, bzw. untere Kanal ein Füllelement aufweist, auf welchem das obere, stabförmige Element, welches das untere, erste stabförmige Element kreuzt, aufliegt. Die Höhe des Füllelements entspricht dabei im Wesentlichen dem Durchmesser des in diesem Verbindungselement eingelegten, unteren stabförmigen Elements.

In einer zweiten Ausführungsform weist das Verbindungselement zwei rechtwinklig zueinander angeordnete plattenförmige Elemente auf, welche jeweils eine erste Durchgangsöffnung für die Aufnahme bzw. das Durchstossen eines ersten stabförmigen Elements der ersten Reihe und jeweils eine zweite Durchgangsöffnung für die Aufnahme bzw. das Durchstossen eines ersten stabförmigen Elements der zweiten Reihe aufweist. Dabei schneiden sich die beiden plattenförmigen Elemente mit einer Schnittgerade senkrecht zur ersten, oberen Ebene bzw. Gitterebene. Dabei ist vorzugsweise das Verbindungselement einstückig mit dem Stützelement ausgebildet. Alternativ können die beiden plattenförmigen Elemente mit ihrem jeweiligen unteren Ende in entsprechenden schlitzförmigen Aussparungen in einem oberen Bereich des Stützelements aufgenommen, bzw. mittels einer Steckverbindung oder Rastverbindung am Stützelement befestigt sein.

Die beiden plattenförmigen Elemente sind vorzugsweise diagonal zu der ersten und zu der zweiten horizontalen Richtung angeordnet und mit ihrer jeweiligen Plattenebene rechtwinklig zur ersten, oberen Ebene und zur zweiten, unteren Ebene angeordnet. Vorzugsweise sind die plattenförmigen Elemente aus Metall oder einem Hartkunststoff hergestellt.

Die Länge der rechteckigen, plattenförmigen Elemente beträgt vorzugsweise 1-6 cm, insbesondere bevorzugt 2-4 cm, am meisten bevorzugt ca. 3 cm, gemessen parallel zur Längsachse des Stützelements. Die Breite der plattenförmigen Elemente bzw. Plättchen beträgt vorzugsweise 0.5-2 cm, insbesondere bevorzugt 1-1.8 cm, am meisten bevorzugt ca. 1.5 cm. Die Dimensionen dieser Plättchen hängen von der Wahl des Materials und der Dicke bzw. des Durchmessers der stabförmigen Elemente ab.

Sowohl die stabähnlichen Elemente, als auch die Verbindungselemente und die Stützelemente können aus Kunststoff, insbesondere aus einem Hartkunststoff, aus Holz oder aus Metall hergestellt sein. Die Kupplungselemente sind vorzugsweise aus einem Hartkunststoff oder aus Metall hergestellt.

Die vorliegende Erfindung betrifft weiterhin ein Verbindungselement für die oben beschriebenen erfindungsgemässen Ausführungsformen einer Schutzvorrichtung gegen Tiere oder Personen gemäss der obigen Beschreibung. Das Verbindungselement ist ausgebildet zur Aufnahme mindestens eines ersten stabförmigen Elements der ersten Reihe und mindestens eines ersten stabförmigen Elements der zweiten Reihe, und dies an mindestens einem Kreuzungspunkt zwischen einem ersten stabförmigen Element der ersten Reihe und einem ersten stabförmigen Element der zweiten Reihe des Gitters. Dabei weist das Verbindungselement eine erste Ausnehmung auf zur Aufnahme eines ersten stabförmigen Elements der ersten Reihe und eine zweite Ausnehmung zur Aufnahme eines stabförmigen Elements der zweiten Reihe. Durch das Bereitstellen solcher Verbindungselemente können herkömmliche stabförmige Elemente verwendet werden, sofern sie in ihrer Dicke dem Durchmesser der Ausnehmungen des Verbindungselements angepasst sind. Vorzugsweise wird die Dicke der stabförmigen Elemente der ersten Reihe und die Dicke der stabförmigen Elemente der zweiten Reihe nur unwesentlich kleiner gewählt als der Durchmesser der ersten Ausnehmung und der zweiten Ausnehmung, sodass die stabförmigen Elemente in die Ausnehmungen bzw. in die Kanäle eingelegt werden können, ev. eingerastet werden können. Sie sollten aber auch nur unter geringem Kraftaufwand wieder aus der Ausnehmung entfernt werden können bzw. daraus lösbar sein, aber auch nicht einfach daraus hinausfallen.

Vorzugsweise weist das Verbindungselement jeweils ein Stützelement auf, welches eine dritte Längsachse aufweist und ein erstes, oberes Ende und ein zweites, unteres Ende aufweist. Die dritte Längsachse des Stützelements ist in einer vertikalen Richtung senkrecht zur ersten Längsachse der ersten Ausnehmung und zur zweiten Längsachse der zweiten Ausnehmung und senkrecht zu einer durch die stabförmigen Elemente aufzuspannenden Gitterebene angeordnet. Zwecks Abstützung des Gitters auf der Bodenoberfläche oder zur Verankerung der Schutzvorrichtung im Bodenabschnitt erstreckt sich das Stützelement in einer zweiten vertikalen Richtung von der ersten, oberen Ebene bzw. Gitterebene weg zur zweiten, unten Ebene hin im Wesentlichen rechtwinklig zur ersten, oberen Ebene. Das Stützelement erstreckt sich somit im Wesentlichen von der ersten horizontalen Ebene mindestens bis zur zweiten horizontalen Ebene und im Falle eines Einsteckens des Stützelements mit seinem unteren Ende in den Boden hinein auch durch die zweite Ebene hindurch. Vorzugsweise ist das Stützelement einstückig mit dem Verbindungselement ausgebildet ist, beispielsweise an das Verbindungselement angespritzt oder lösbar daran befestigt.

Gemäss einer ersten erfindungsgemässen Ausführungsform des Verbindungselements ist die erste Ausnehmung als ein Kanal mit einer ersten Längsachse ausgebildet, und die zweite Ausnehmung als ein Kanal mit einer zweiten Längsachse ausgebildet. Dabei ist die erste Längsachse der ersten Ausnehmung rechtwinklig zur zweiten Längsachse der zweiten Ausnehmung angeordnet.

Die erfindungsgemässe Schutzvorrichtung ist modular aufgebaut und dadurch nachträglich erweiterbar oder in ihrer Form veränderbar. Die modulare Bauweise erlaubt es einerseits, ein Gitter beispielsweise um einen Baum herum aufzubauen, indem von der überdeckten Fläche im Wesentlichen nur der Stamm ausgelassen wird. Die Modularität ermöglicht aber insbesondere auch, das Pflanzenschutzgitter allmählich zu erweitern oder dessen Verbindungsabstände nachträglich aufgrund der flächigen Ausdehnung der darunter wachsenden betreffenden Pflanzen anzupassen. Wenn man wachsenden Stämmen oder neuen Verästelungen, oder z.B. wachsendem Gemüse ausweichen möchte, oder falls angrenzend an die bestehenden Pflanzen, zusätzliche neue Pflanzen angepflanzt werden, kann das Auslegemuster der Abwehr- bzw. Schutzvorrichtung individuell den Bedürfnissen des Nutzers angepasst werden. So kann man, wenn beispielsweise an einer Stelle aufgrund z.B. eines wachsenden Salatkopfes ein Stützelement bzw. Fuss eines Verbindungselements nachträglich im Weg ist, gewisse Verbindungselemente entfernen oder deren Abstände verändern, und die Stablänge der sich kreuzenden stabförmigen Elemente und die "Maschenweite" des Schutzgitters variieren. Innerhalb eines Gitters kann die Maschengrösse und -Form auch variieren. Dabei werden Kupplungselemente verwendet, um zwei axial benachbarte stabförmige Elemente entlang ihrer Längsachse miteinander zu verbinden und somit die Maschengrösse zu vergrössern. Die Maschenweite des Gitters beträgt vorzugsweise 5-20 cm, insbesondere bevorzugt 10-15 cm, am meisten bevorzugte 12-14 cm, gemessen zwischen zwei Kreuzungspunkten, bzw. vom Mittelpunkt des kreisförmigen Querschnittes eines ersten stabförmigen Elements bis zum Mittelpunkt des Querschnittes eines axial benachbarten zweiten stabförmigen Elements innerhalb der gleichen Reihe entlang der ersten Ebene.

Je nach Wahl der Länge der stabförmigen Elemente, der Zahl der Kupplungselemente zwischen Verbindungselementen, der Zahl der Verbindungselemente und der Zahl der Stützelemente, können unterschiedliche Grundrisse realisiert werden. Durch die erfindungsgemässe Schutzvorrichtung kann ein bestimmter Bodenabschnitt, einschliesslich der allfällig darauf wachsenden Pflanzen auch längerfristig geschützt werden. Kletterpflanzen können sich ausserdem um das Gitter herumwinden und sich somit flächendeckend ausdehnen. Durch das Bewachsenlassen kann das Gitter auch optisch verschönert werden.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: perspektivische Ansicht einer nicht-erfindungsgemässen Ausführungsform der vorliegenden Erfindung;
- Fig. 2: Ansicht von oben der Ausführungsform von Fig. 1;
- Fig. 3: Schnittdarstellung der Ausführungsform von Fig. 1 durch Schnittebene AA von Fig. 2;
- Fig. 4: perspektivische Ansicht der ersten erfindungsgemässen Ausführungsform der vorliegenden Erfindung;
- Fig. 5: Ansicht von oben der Ausführungsform von Fig. 4;
- Fig. 6: Schnittdarstellung der Ausführungsform von Fig. 4 durch Schnittebene BB von Fig. 5;
- Fig. 7: perspektivische Ansicht einer zweiten erfindungsgemässen Ausführungsform der vorliegenden Erfindung; wobei in Fig. 7A eine erste Variante und in Fig. 7B eine zweite Variante dargestellt ist;
- Fig. 8: Ansicht von oben der Ausführungsform von Fig. 7B;
- Fig. 9: Schnittdarstellung der Ausführungsform gemäss Fig. 7B durch Schnittebene CC von Fig. 8.

### BESCHREIBUNG BEVORZUGTER AUSFÜHRUNGSFORMEN

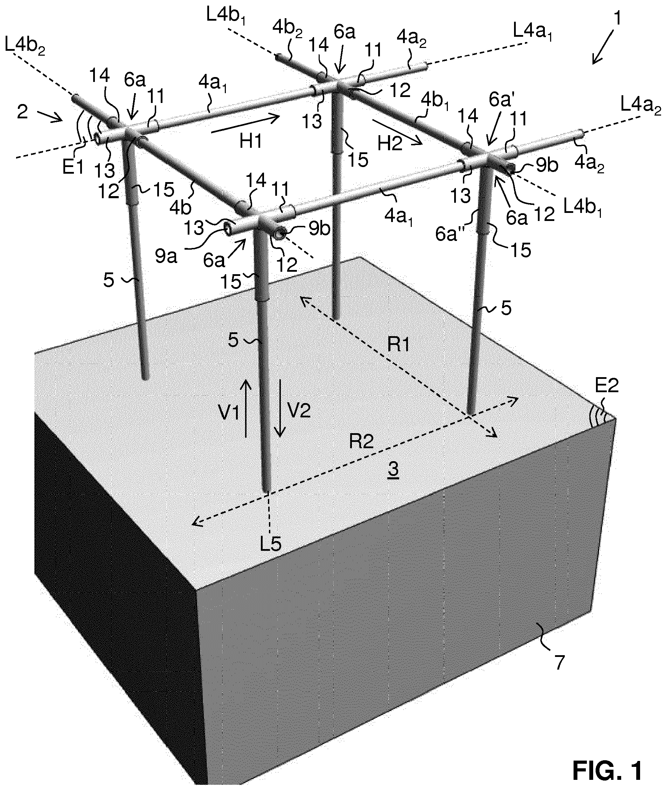

In Fig. 1 ist ein nicht zur beanspruchten Erfindung gehörendes, aber das Verständnis der Erfindung erleichterndes Ausführungsbeispiel einer Schutzvorrichtung dargestellt, wobei es sich hier lediglich um einen Ausschnitt mit nur einem vollständigen Quadrat einer Gitterstruktur 2 einer Schutzvorrichtung 1, und somit gewissermassen um die kleinste Einheit, bzw. ein Modul der Schutzvorrichtung 1 handelt. Die Schutzvorrichtung 1 weist ein Gitter 2 auf, welches sich in einer ersten, im Wesentlichen horizontalen Ebene E1 ausdehnt. Diese Ebene E1 bzw. Gitterebene ist parallel zu einer zweiten, im Wesentlichen horizontalen Ebene E2 angeordnet, welche sich entlang der im Wesentlichen horizontalen Oberfläche 3 einer Unterlage, bzw. eines Bodens 7, ausdehnt. Beim Boden 7 handelt es sich beispielsweise um eine Rasenfläche oder eine bepflanzte oder zu bepflanzende Erdfläche, z.B. ein Beet. Das Gitter 2 ist aus einer ersten Reihe R1 von stabförmigen Elementen 4a bzw. Stäben aufgebaut, welche parallel zueinander angeordnet sind. Rechtwinklig zu der ersten Reihe R1 ist eine zweite Reihe R2 von ebenfalls parallel zueinander angeordneten stabförmigen Elementen 4b bzw. Stäben dargestellt. Die erste Reihe R1 erstreckt sich in einer ersten horizontalen Richtung H1 in der Ebene E1 und die zweite Reihe R2 erstreckt sich in einer zweiten horizontalen Richtung H2, welche rechtwinklig zur ersten horizontalen Richtung H1, ebenfalls in der Ebene E1 verläuft. An den jeweiligen Kontakt- bzw. Kreuzungspunkten 8 eines stabförmigen Elements 4a der ersten Reihe R1 mit einem stabförmigen Element 4b der zweiten Reihe R2 ist jeweils ein Verbindungselement 6a angeordnet. Dieses verbindet jeweils vier der stabförmigen Elemente 4a, 4b bzw. Gitterstäbe miteinander. Die Ebene E1 wird gewissermassen an einem Verbindungselement 6a vom Kontakt- bzw. Kreuzungspunkt 8 von einem am Verbindungselement 6a befestigten stabförmigen Element 4a der ersten Reihe R1 mit einem stabförmigen Element 4b der zweiten Reihe R2 aufgespannt.

Das Verbindungselement 6a weist einen oberen Abschnitt 6a` und einen unteren Abschnitt 6a" auf. Der obere Abschnitt 6a` weist jeweils vier Öffnungen 9a, 9b auf, zur Aufnahme jeweils eines stabförmigen Elements 4a, 4b bzw. Gitterstabs 4a, 4b. Mit anderen Worten ist der obere Abschnitt 6a aus vier Aufnahmehülsen 11, 12, 13, 14 ausgebildet, welche kreuzförmig in der oberen Ebene E1 angeordnet sind, wobei jeweils eine Aufnahmehülse 11, 12, 13, 14 zur Aufnahme jeweils eines stabförmigen Elements 4a, 4b einen Arm des Kreuzes bildet. Somit ist jedes Verbindungselement 6a zur Aufnahme von zwei stabförmigen Elementen 4a der ersten Reihe R1 und von zwei stabförmigen Elementen 4b der zweiten Reihe geeignet. Dabei ist ein erstes stabförmiges Element 4a₁ der ersten Reihe R1 im montierten Zustand mit jeweils einem ersten Ende 4a' im Verbindungselement 6a gelagert, und ein zweites stabförmiges Element 4a₂ der ersten Reihe R1 ist koaxial zum ersten stabförmigen Element 4a1 der ersten Reihe R1 mit einem zweiten Ende 4a" gelagert.

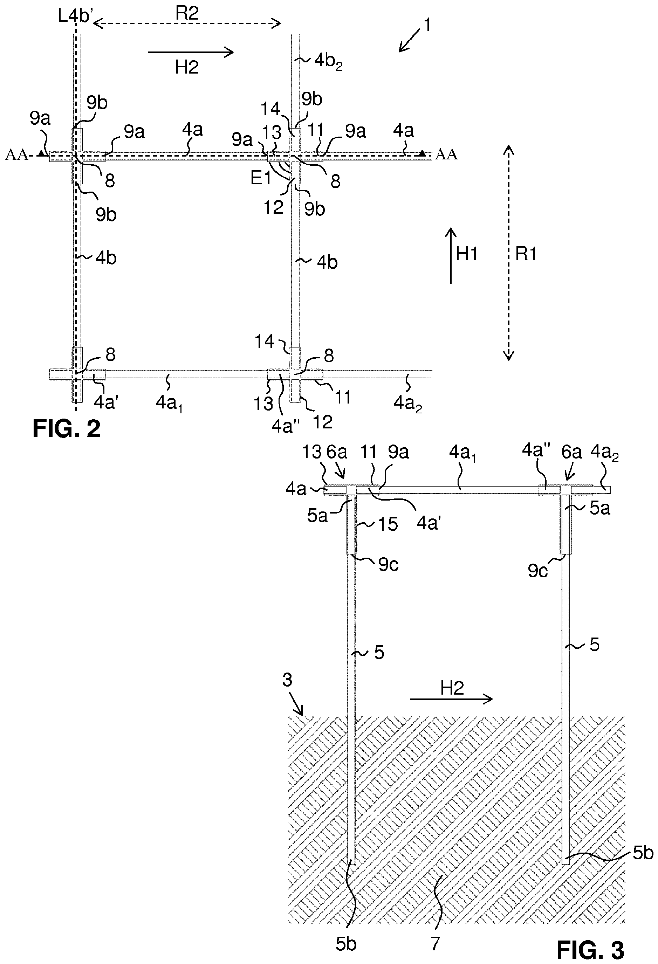

Wie im Grundriss von Fig. 2 zu sehen ist, berühren sich das erste Ende 4a` des ersten Gitterstabs 4a₁ und das zweite Ende 4a" des zweiten Gitterstabs 4a₂ dabei nicht, obwohl die Ausnehmungen 9a, 9b, der vier Aufnahmehülsen 11, 12, 13, 14 im Inneren des Verbindungselements 6a ineinander übergehen. Dies ist idealerweise durch eine geeignete Wahl des Innendurchmessers der Aufnahmehülsen 11, 12, 13, 14 sichergestellt, welcher nur knapp grösser gewählt ist als der Aussendurchmesser des jeweiligen stabförmigen Elements 4a, 4b, sodass eine kraft- bzw. reibschlüssige Halterung der stabförmigen Elemente 4a, 4b erreicht wird.

Wie im Ausführungsbeispiel von Fig. 1 gezeigt, bleibt jeweils eine erste Ausnehmung 9a, und jeweils eine zweite Ausnehmung 9b des an der Ecke angeordneten Verbindungselements 6a frei (in Fig. 1 links vorne angeordnet). Diese beiden Ausnehmungen 9a, 9b stehen im Falle einer gewünschten Flächenvergrösserung der Schutzvorrichtung 1 bzw. deren Gitterstruktur 2 zur Aufnahme jeweils eines weiteren Gitterstabs 4a der ersten Reihe bzw. eines weiteren Gitterstabs 4b der zweiten Reihe R2 bereit. Ebenso bleibt eine zweite Ausnehmung 9b des am Rand angeordneten Verbindungselements 6a zur Aufnahme eines weiteren Gitterstabs 4b der zweiten Reihe R2 frei (in Fig. 1 rechts vorne angeordnet).

Ausserdem weist jedes Verbindungselement 6a in seinem unteren Abschnitt 6a" eine dritte Ausnehmung 9c auf, zur Aufnahme eines Stützelements 5. Die dritte Ausnehmung 9c ist in Form einer fünften Aufnahmehülse 15 ausgebildet, welche zur Aufnahme eines oberen Endes 5a eines Stützelements 5 geeignet ist. Die fünfte Aufnahmehülse 15 erstreckt sich somit senkrecht zur Ebene E1. Dabei ist die Längsachse L5 des Stützelements 5 parallel zu einer ersten vertikalen Richtung V1 angeordnet, welche sich rechtwinklig zur Ebene E1 und somit senkrecht zu der ersten horizontalen Richtung H1 und zur zweiten horizontalen Richtung H2 erstreckt. Das Stützelement 5 dient gewissermassen als Abstandhalter des Gitters 2 entlang der ersten vertikalen Richtung V1 von der Bodenoberfläche 3 bzw. zur Verankerung der Schutzvorrichtung 1 im Boden 7. Die Stützelemente 5 weisen jeweils ein besagtes obere Ende 5a auf, welches am Verbindungselement 6a befestigt ist, bzw. in einer Ausnehmung 9c bzw. in der fünften Aufnahmehülse 15 des Verbindungselements 6a gelagert ist, und ein unteres Ende 5b auf, welches, wie in Fig. 3 dargestellt, in den Boden 7 eingesteckt ist.

Im vorliegenden, nicht erfindungsgemässen Ausführungsbeispiel von Fig. 1-3 beschreiben jeweils zwei stabförmige Elemente 4a der ersten Reihe R1 und zwei stabförmige Elemente 4b der zweiten Reihe R2 mit den vier an den vier Ecken des aufgespannten Vierecks angeordneten Verbindungselementen 6a eine quadratische Grundfläche, wie in Fig. 2 erkannt werden kann. Werden hier weitere Module angehängt, so weist die Schutzvorrichtung 1 an jedem Kontakt- bzw. Kreuzungspunkt 8 ein Verbindungselement 6a auf. Die an den Ecken angeordneten Verbindungselemente 6a weisen im vorliegenden Ausführungsbeispiel jeweils zwei leere Aufnahmehülsen auf zwecks Erweiterung des Gitters 2 durch Ansetzen weiterer stabförmiger Elemente 4a, 4b und Verbindungselemente 6a.

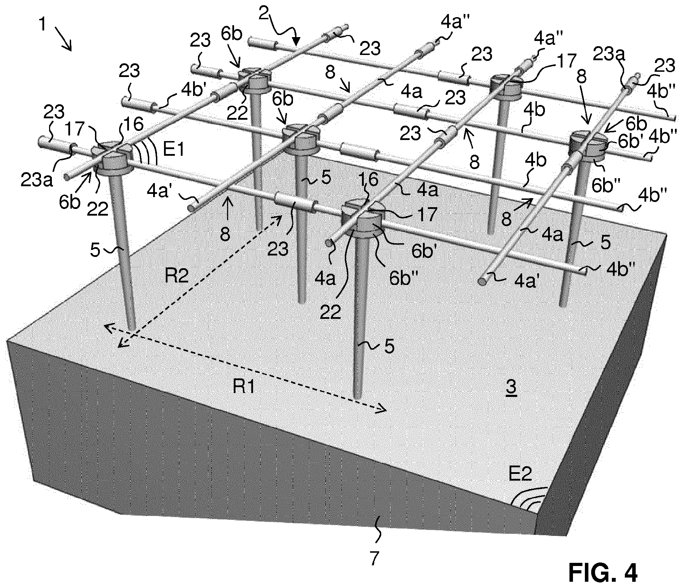

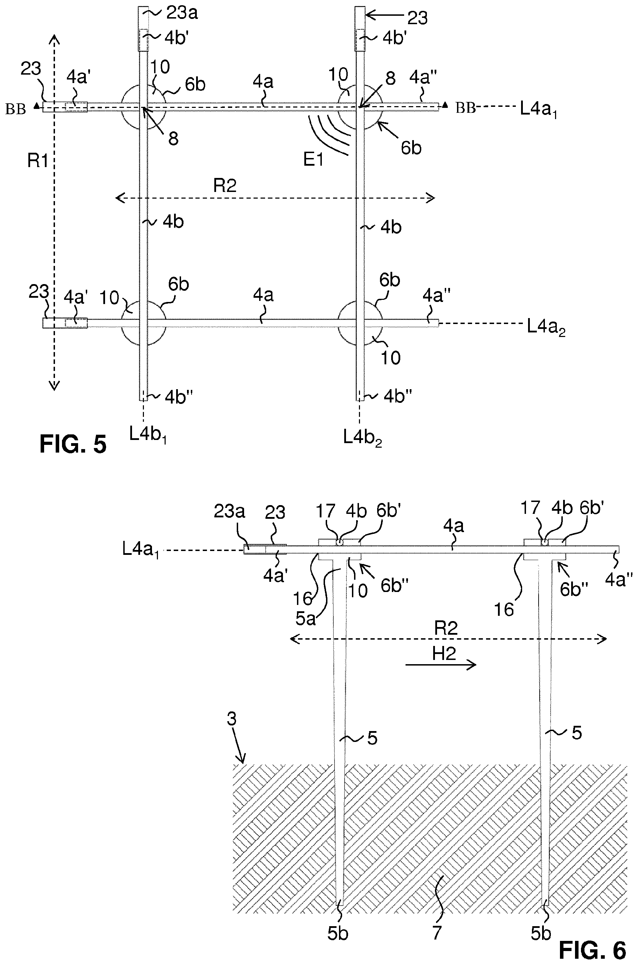

In den Figuren 4-6 ist ein erstes Ausführungsbeispiel der vorliegenden Erfindung dargestellt. Hier sind die Verbindungselemente 6b anders aufgebaut als im nicht-erfindungsgemässen Ausführungsbeispiel von Fig. 1-3. Jedes Verbindungselement 6b weist hier einen oberen Abschnitt 6b` und einen unteren Abschnitt 6b" auf, wobei sowohl der obere Abschnitt als auch der untere Abschnitt in Form einer Scheibe 10 ausgebildet ist. Zur Aufnahme der stabförmigen Elemente 4a, 4b weist das Verbindungselement 6b dieser bevorzugten Ausführungsform im scheibenförmigen oberen Abschnitt 6b` zwei rechtwinklig zueinander angeordnete und sich kreuzende Kanäle 16, 17 auf. Der erste Kanal 16 dient als erste Ausnehmung 9a, in welcher jeweils ein stabförmiges Element 4a der ersten Reihe R1 gelagert ist, und der zweite Kanal 17 dient als zweite Ausnehmung 9b, in welcher jeweils ein stabförmiges Element 4b der zweiten Reihe R2 gelagert ist. Dabei ist in dem in Fig. 4 dargestellten Ausführungsbeispiel der zweite Kanal 17 zur Aufnahme eines stabförmigen Elements 4b der zweiten Reihe R2 in vertikaler Richtung V1 tiefer ausgebildet als der erste Kanal 16 zur Aufnahme eines stabförmigen Elements 4a der ersten Reihe R1. Dadurch überlagert jeweils ein stabförmiges Element 4a der ersten Reihe R1 das jeweilige stabförmige Element 4b der zweiten Reihe R2 im Verbindungselement 6b, d.h. es gibt im vorliegenden Ausführungsbeispiel sowohl innerhalb des Verbindungselements 6b als auch ausserhalb des Verbindungselements 6b Kreuzungspunkte 8 der stabförmigen Elemente 4a, 4b. Um die Tiefe des jeweils einen Kanals 16, 17, welcher das überlagernde stabförmige Element 4a, 4b aufnimmt, zu verringern, und damit das obere stabförmige Element 4b der zweiten Reihe R2, welches im Kreuzungspunkt 8 auf dem anderen stabförmigen Element 4a der ersten Reihe R1 aufliegt, parallel zur Ebene E2 der Bodenoberfläche 3 angeordnet ist, weist einer der beiden Kanäle 16, 17 jeweils an der Peripherie der Scheibe 10 zwei Füllelemente 22 auf, auf welchen beiden das jeweilige stabförmige Element 4b der zweiten Reihe R2 aufliegt. Dieses Füllelement 22 weist eine Höhe auf, welche im Wesentlichen der Höhe des im Verbindungselement 6b im ersten Kanal 16 liegenden unteren stabförmigen Elements 4a entspricht.

Im ersten erfindungsgemässen Ausführungsbeispiel gemäss Fig. 4-6 ist das Stützelement 5 einstückig mit dem unteren Abschnitt 6b" des Verbindungselements ausgebildet bzw. daran angeformt. Auch in diesem Ausführungsbeispiel ragt das Stützelement 5 mit seinem unteren Ende 5b in den Boden 7 hinein. Der Aussendurchmesser des Stützelements 5 nimmt in diesem Ausführungsbeispiel nach unten hin ab, bzw. das Stützelement 5 ist nach unten hin konisch verjüngt.

Der untere Abschnitt 6b" ist hier ebenfalls scheibenförmig ausgebildet, ist aber im Gegensatz zur Scheibe 10 des oberen Abschnittes 6b` des Verbindungselements 6b nicht durch Kanäle 16, 17 unterbrochen.

Im Gegensatz zum nicht beanspruchten, nicht-erfindungsgemässen Ausführungsbeispiel sind im erfindungsgemässen Ausführungsbeispiel gemäss Fig. 4-6 nicht jeweils die Enden 4a`, 4b`, 4a", 4b" der stabförmigen Elemente 4a, 4b im Verbindungselement 6b aufgenommen, sondern jeweils ein mittlerer Abschnitt des jeweiligen stabförmigen Elemente 4a, 4b.

In diesem, in Fig. 4-6 dargestellten Ausführungsbeispiel sind jeweils zwei in axialer Richtung benachbarte stabförmige Elemente, bzw. in der ersten Richtung aneinander anschliessende stabförmige Elemente 4a durch Kupplungselemente 23 koaxial miteinander verbunden. Dazu wird jeweils ein erstes Ende 4a`, 4b' eines ersten stabförmigen Elements 4a, b mit einem zweiten Ende 4a", 4b" eines axial benachbarten zweiten stabförmigen Elements 4a, 4b durch ein Kupplungselement 23 koaxial miteinander verbunden. Die dargestellten Kupplungselemente 23 sind jeweils hülsenförmig ausgebildet mit einer durchgehenden Ausnehmung 23a. Von einer Seite her wird ein stabförmiges Element 4a, 4b mit einem ersten Ende 4a`, 4b' in das Kupplungselement 6b eingeführt, von der zweiten Seite her ein in axialer Richtung L4a, L4b benachbartes Element mit einem zweiten Ende 4a", 4b" koaxial dazu.

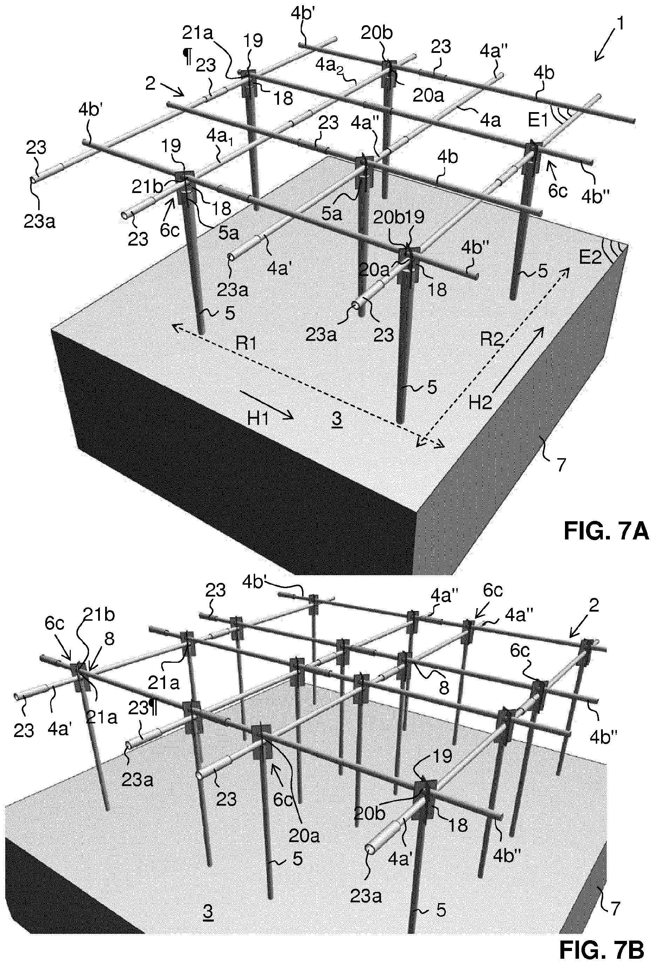

In den Figuren 7A, 7B, und 8-9 ist ein zweites erfindungsgemässes Ausführungsbeispiel dargestellt. Auch hier kreuzen sich jeweils ein stabförmiges Element 4a der ersten Reihe R1 mit einem stabförmigen Element 4b der zweiten Reihe R2 im Verbindungselement 6c. Doch hier sind die Verbindungselemente 6c anders aufgebaut als im ersten erfindungsgemässen Ausführungsbeispiel von Fig. 4-6. Im zweiten erfindungsgemässen Ausführungsbeispiel weist jedes Verbindungselement 6c jeweils zwei sich schneidende, mit ihren Plattenebenen rechtwinklig zueinander angeordnete plattenförmige Elemente 18, 19 auf, welche jeweils zwei übereinander liegende Durchgangsöffnungen bzw. Bohrungen 20a, 20b bzw. 21a, 21b aufweisen, durch welche zwei übereinander liegende stabförmige Elemente 4a, 4b durchgesteckt werden.

Die beiden plattenförmigen Elemente 18, 19 bilden gewissermassen einen oberen Abschnitt 6c` des Verbindungselements 6c. Im unteren Abschnitt 6c" des Verbindungselements 6c ist der untere Bereich der beiden plattenförmigen Elemente mit dem Stützelement 5 verbunden bzw. einstückig daran angeformt. Auch in diesem zweiten Ausführungsbeispiel ragt das Stützelement 5 mit seinem unteren Ende 5b in den Boden 7 hinein.

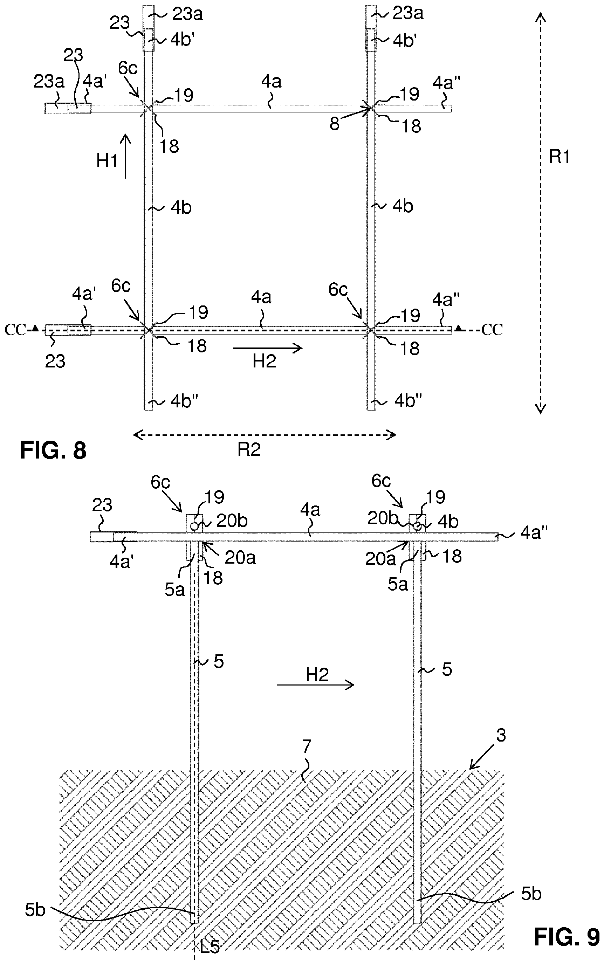

In der ersten Variante dieses zweiten Ausführungsbeispiels gemäss Fig. 7A ist das Stützelement 5 bzw. der Fuss nach unten hin konisch verjüngt ausgebildet und reicht mit seinem oberen Ende 5a nicht bis ganz an das untere stabförmige Element 4a der ersten Reihe R1 heran, bzw. ist vom unteren stabförmigen Element 4a der ersten Reihe R1, welches in dem entsprechenden Verbindungselement 6c aufgenommen ist, beabstandet. In der zweiten Variante dieses zweiten Ausführungsbeispiels gemäss Fig. 7B weist das Stützelement 5 keine Verjüngung auf und reicht mit seinem oberen Ende 5a bis an das untere stabförmige Element 4a der ersten Reihe R1 heran. In der zweiten Variante gemäss Fig. 7B weist jeder Kreuzungspunkt 8 ein Verbindungselement 6c mit einem Stützelement 5 auf, im Gegensatz zur ersten Variante gemäss Fig. 7A, wo nur an jedem zweiten oder dritten Kreuzungspunkt 8 eines stabförmigen Elementes 4a der ersten Reihe R1 mit einem stabförmigen Element der zweiten Reihe R2 ein Verbindungselement 6c angeordnet ist. In Fig. 8 ist ein Grundriss gemäss der zweiten Variante des zweiten Ausführungsbeispiels dargestellt, wo an jedem Kreuzungspunkt 8 ein Verbindungselement dargestellt ist.

In den dargestellten drei Ausführungsbeispielen beträgt die Dicke bzw. der Aussendurchmesser der stabförmigen Elemente 4a, 4b jeweils 0.5 cm, und die Länge jedes einzelnen stabförmigen Elements beträgt 25 cm. Die Länge des Stützelements 5 beträgt jeweils ebenfalls 25 cm, wobei davon ca. 10 cm in den Erdbereich bzw. in den Boden hineinragen. Somit beträgt der Abstand der Ebene E2 an der Bodenoberfläche zur Ebene E1 des Gitters 15 cm. Die Länge der im ersten und zweiten erfindungsgemässen Ausführungsbeispiel dargestellten, aber auch im nicht-erfindungsgemässen Ausführungsbeispiel optionalen Kupplungselemente 23 beträgt jeweils 3 cm, wobei jedes stabförmige Element 4a, 4b bis zu einer Tiefe von 1.5 cm in das Kupplungselement 23 eingeführt wird, d.h. zwei axial benachbarte stabförmige Elemente 4a, 4b berühren sich in der Mitte des jeweiligen Kupplungselements 23 mit ihren jeweiligen Endflächen, da sie jeweils bis zur Hälfte des Kupplungselements 23 in dieses hineinragen. Der Aussendurchmesser eines Kupplungselements 23 beträgt 0.7 cm, und erlaubt somit bei geeigneter Manteldicke bzw. bei geeignetem Innendurchmesser ein reibfestes Einstecken von zwei axial benachbarten stabförmigen Elementen 4a, 4b von jeweils 0.5 cm Aussendurchmesser.

Die Maschenweite des Gitters 2 beträgt 10-15 cm, gemessen zwischen zwei Kreuzungspunkten 8 entlang der gleichen Längsachse L4a, L4b, vom Kreismittelpunkt des kreisförmigen Querschnittes eines ersten stabförmigen Elements 4a, 4b bis zum Kreismittelpunkt des Querschnittes eines axial benachbarten zweiten stabförmigen Elements 4a, 4b innerhalb der gleichen Reihe R1, R2 entlang der ersten Ebene E1. Die Schnittebenen AA, BB, CC in den Figuren 2 bzw. 5 bzw. 8 verlaufen jeweils senkrecht zur Ebene E1 und entlang der Längsachse L4a, L4b des jeweiligen geschnittenen stabförmigen Elements 4a, 4b.

Im nicht-erfindungsgemässen Ausführungsbeispiel beträgt die Summe der Längen von zwei gegenüberliegenden bzw. axial benachbarten Aufnahmehülsen 11, 13 bzw. 12, 14 jeweils 3.7 cm, wobei jeder Arm um 1.5 cm in der Ebene E1 über den Aussendurchmesser der fünften Aufnahmehülse 15 hinausragt, und wobei jedes stabförmige Element 4a, 4b mit 1.5 cm in die jeweilige Aufnahmehülse 11, 12, 13, 14 hineinragt.

Der Aussendurchmesser der Aufnahmehülsen 11, 12, 13, 14 und 15 beträgt jeweils 0.7 cm. Im zweiten Ausführungsbeispiel beträgt der Durchmesser der Scheibe 10 des oberen Abschnittes 6b` des Verbindungselements 6b 3 cm. Der Durchmesser des Stützelements 5 am oberen Ende 5a beträgt 0.5 cm, und nimmt zum unteren Ende hin ab, auf ca. 0.2 cm. Im dritten Ausführungsbeispiel beträgt die Länge der rechteckigen, plattenförmigen Elemente 18, 19, 3 cm, gemessen parallel zur Längsachse L5 des Stützelements 5. Die Breite der plattenförmigen Elemente 18, 19 beträgt im zweiten erfindungsgemässen Ausführungsbeispiel 1.5 cm.

### BEZUGSZEICHENLISTE

| | | | |
|---|---|---|---|
| 1 | Schutzvorrichtung | 13 | dritte Aufnahmehülse von 6a |
| 2 | Gitter | 14 | vierte Aufnahmehülse von 6a |
| 3 | Bodenoberfläche | 15 | fünfte Aufnahmehülse von 6a |
| 4a | stabförmiges Element von R1 | 16 | erster Kanal von 6b für 4a |
| 4a' | erstes Ende von 4a | 17 | zweiter Kanal von 6b für 4b |
| 4a" | zweites Ende von 4a | 18 | erstes plattenförmiges |
| 4b | stabförmiges Element von R2 | | Element von 6c |
| 4b' | erstes Ende von 4b | 19 | zweites plattenförmiges |
| 4b" | zweites Ende von 4b | | Element von 6c |
| 5 | Stützelement | 20 | erste Bohrung, |
| 5a | erstes, oberes Ende von 5 | | Durchgangsöffnung in 18 |
| 5b | zweites, unteres Ende von 5 | 21 | zweite Bohrung, Durchgangsöffnung in 19 |
| 6a, 6b, 6c | Verbindungselement | | |
| 6a` | oberer Abschnitt von 6a | 22 | Füllelement |
| 6a" | unterer Abschnitt von 6a | 23 | Kupplungselement |
| 6b' | oberer Abschnitt von 6b | 23a | zentrale axiale Ausnehmung von 23 |
| 6b" | unterer Abschnitt von 6b | | |
| 6c` | oberer Abschnitt von 6c | AA | Schnittebene in Fig. 2 |
| 6c" | unterer Abschnitt von 6c | BB | Schnittebene in Fig. 5 |
| 7 | Bodenabschnitt | CC | Schnittebene in Fig. 8 |
| 8 | Kontakt-/Kreuzungspunkt | E1 | erste, obere Ebene |
| 9a | erste Ausnehmung in 6a, 6b, 6c für 4a | E2 | zweite, untere Ebene |
| | | H1 | erste horizontale Richtung |
| 9b | zweite Ausnehmung in 6a, 6b, 6c für 4b | H2 | zweite horizontale Richtung |
| | | L4a₁-L4aₙ | erste Längsachse von 4a |
| 9c | dritte Ausnehmung in 6a für 5 | L4b₁-L4bₙ | zweite Längsachse von 4b |
| | | L5 | dritte Längsachse von 5 |
| 10 | Scheibe von 6b | R1 | erste Reihe aus 4a |
| 11 | erste Aufnahmehülse von 6a | R2 | zweite Reihe aus 4b |
| 12 | zweite Aufnahmehülse von 6a | V1 | erste vertikale Richtung |
| | | V2 | zweite vertikale Richtung |

## Patentansprüche

1. Verbindungselement (6b, 6c) für eine Schutzvorrichtung gegen Tiere, wobei die Schutzvorrichtung ein Gitter (2) aus einer Vielzahl von in einer ersten, oberen Ebene (E1) im Wesentlichen angeordneten stabförmigen Elementen (4a, 4b) aufweist, welche parallel zu einer Bodenoberfläche (3) eines Bodenabschnittes (7), die sich im Wesentlichen entlang einer zweiten, unteren Ebene (E2) ausdehnt, angeordnet sind, wobei das Gitter (2) von der Bodenoberfläche (3) in einer ersten vertikalen Richtung (V1) beabstandet angeordnet ist, wobei das Gitter (2) eine erste Reihe (R1) von stabförmigen Elementen (4a) aufweist, welche jeweils eine erste Längsachse (L4a₁-L4aₙ) aufweisen und sich in einer ersten horizontalen Richtung (H1) parallel zueinander erstrecken, und wobei das Gitter (2) eine zweite Reihe (R2) von stabförmigen Elementen (4b) aufweist, welche jeweils eine zweite Längsachse (L4b₁-L4bₙ) aufweisen und sich in einer zweiten horizontalen Richtung (H2) parallel zueinander erstrecken, wobei die zweite horizontale Richtung (H2) im Wesentlichen rechtwinklig zur ersten horizontalen Richtung (H1) angeordnet ist, und wobei die erste horizontale Richtung (H1) und die zweite horizontale Richtung (H2) im Wesentlichen rechtwinklig zur ersten vertikalen Richtung (V1) angeordnet sind, **wobei** das Verbindungselement (6b, 6c) ausgebildet ist zur Aufnahme mindestens eines ersten stabförmigen Elements (4a) der ersten Reihe (R1) und mindestens eines ersten stabförmigen Elements (4b) der zweiten Reihe (R2) an mindestens einem Kreuzungspunkt (8) eines ersten stabförmigen Elements der ersten Reihe (R1) mit einem ersten stabförmigen Element (4b) der zweiten Reihe (R2) des Gitters (2), wobei das Verbindungselement (6b, 6c) eine erste Ausnehmung (9a) aufweist zur Aufnahme eines ersten stabförmigen Elements (4a) der ersten Reihe (R1) und eine zweite Ausnehmung (9b) aufweist zur Aufnahme eines stabförmigen Elements (4b) der zweiten Reihe (4b); wobei die erste Ausnehmung (9a) eine axiale Ausdehnung aufweist, welche rechtwinklig zu einer axialen Ausdehnung der zweiten Ausnehmung (9b) angeordnet ist, sodass sich ein in der ersten Ausnehmung (9a) aufgenommenes erstes stabförmiges Element (4a) der ersten Reihe (R1) und ein in der zweiten Ausnehmung aufgenommenes erstes stabförmiges Element (4b) der zweiten Reihe (R2) des Gitters im Verbindungselement (6b, 6c) kreuzen können, **dadurch gekennzeichnet, dass** das Verbindungselement (6b) einen oberen Abschnitt (6b') und einen unteren Abschnitt (6b') aufweist, wobei im oberen Abschnitt (6b') zwei Ausnehmungen angeordnet sind, welche in Form eines ersten, nach oben hin offenen Kanals (16) für die Aufnahme eines ersten stabförmigen Elements (4a) entlang der Längsachse (L4b) des ersten stabförmigen Elements (4a) und in Form eines zweiten, rechtwinklig zum ersten Kanal (16) angeordneten, nach oben hin offenen Kanals (17) für die Aufnahme eines zweiten stabförmigen Elements (4b) entlang der Längsachse (L4b) des zweiten stabförmigen Elements (4b) ausgebildet sind, **oder dass** das Verbindungselement (6c) zwei rechtwinklig zueinander angeordnete, sich schneidende plattenförmige Elemente (18, 19) aufweist, welche jeweils eine erste Durchgangsöffnung (20) für die Aufnahme eines ersten stabförmigen Elements (4a) der ersten Reihe (R1) und jeweils eine zweite Durchgangsöffnung (21) für die Aufnahme eines ersten stabförmigen Elements (4b) der zweiten Reihe (R2) aufweist.

2. Verbindungselement (6b, 6c) gemäss Anspruch 1, **dadurch gekennzeichnet, dass** das Verbindungselement (6b, 6c) jeweils ein Stützelement (5) aufweist, welches eine dritte Längsachse (L5) aufweist und ein erstes, oberes Ende (5a) und ein zweites, unteres Ende (5b) aufweist, wobei sich das Stützelement (5) in einer zweiten vertikalen Richtung (V2) von der ersten Ebene (E1) weg zur zweiten Ebene (E2) hin im Wesentlichen rechtwinklig zur ersten Ebene (E1) erstreckt und zur Abstützung des Gitters (2) auf der Bodenoberfläche (3) oder zur Verankerung der Schutzvorrichtung (1) im Bodenabschnitt (7) ausgebildet ist, und wobei das Stützelement (5) vorzugsweise einstückig mit dem Verbindungselement (6b, 6c) ausgebildet ist.

3. Schutzvorrichtung (1) eines Bodenabschnittes (7) gegen Tiere, aufweisend ein Gitter (2) aus einer Vielzahl von in einer ersten, oberen Ebene (E1) angeordneten stabförmigen Elementen (4a, 4b), wobei die erste, obere Ebene (E1) im Wesentlichen parallel zur einer sich im Wesentlichen entlang einer Bodenoberfläche (3) des Bodenabschnittes (7) ausdehnenden zweiten, unteren Ebene (E2), angeordnet ist und von dieser zweiten, unteren Ebene (E2) entlang einer ersten vertikalen Richtung (V1) beabstandet angeordnet ist, wobei das Gitter (2) eine erste Reihe (R1) von parallel zueinander angeordneten stabförmigen Elementen (4a) aufweist, welche jeweils eine erste Längsachse (L4a₁-L4aₙ) aufweisen und sich in einer ersten horizontalen Richtung (H1) erstrecken, und wobei das Gitter (2) eine zweite Reihe (R2) von parallel zueinander angeordneten stabförmigen Elementen (4b) aufweist, welche jeweils eine zweite Längsachse (L4b₁-L4bₙ) aufweisen und sich in einer zweiten horizontalen Richtung (H2) erstrecken, wobei die zweite horizontale Richtung (H2) im Wesentlichen rechtwinklig zur ersten horizontalen Richtung (H1) angeordnet ist, und wobei die erste horizontale Richtung (H1) und die zweite horizontale Richtung (H2) in der ersten Ebene (E1) angeordnet sind und im Wesentlichen rechtwinklig zur ersten vertikalen Richtung (V1) angeordnet sind, wobei die Schutzvorrichtung (1) mindestens ein Stützelement (5) zur Abstützung des Gitters (2) auf der Bodenoberfläche (3) oder zur Verankerung der Schutzvorrichtung (1) im Bodenabschnitt (7) aufweist, wobei das Stützelement (5) ein erstes, oberes Ende (5a) und ein zweites, unteres Ende (5b) aufweist, und wobei sich das mindestens eine Stützelement (5) mit einer dritten Längsachse (L5) in einer zweiten vertikalen Richtung (V2) von der ersten Ebene (E1) weg zur zweiten Ebene (E2) der Bodenoberfläche (3) hin im Wesentlichen rechtwinklig zur ersten Ebene (E1) erstreckt, **wobei**
die Schutzvorrichtung (1) mindestens einen Kreuzungspunkt (8) aufweist, in welchem sich eines der stabförmigen Elemente (4a) der ersten Reihe (R1) mit einem der stabförmigen Elemente (4b) der zweiten Reihe (R2) des Gitters (2) kreuzt, **dadurch gekennzeichnet, dass** die Schutzvorrichtung (1) ferner mindestens ein Verbindungselement (6b, 6c) gemäss einem der Ansprüche 1-2 am mindestens einem Kreuzungspunkt (8) aufweist

4. Schutzvorrichtung (1) gemäss Anspruch 3, **dadurch gekennzeichnet, dass** das mindestens eine Stützelement (5) an einem der Verbindungselemente (6b, 6c) befestigt ist, wobei die Schutzvorrichtung (1) vorzugsweise eine Vielzahl von Stützelementen (5) aufweist und dass jedes der Stützelemente (5) an jeweils einem der Verbindungselemente (6b, 6c) befestigt ist.

5. Schutzvorrichtung (1) gemäss einem der Ansprüche 3-4, **dadurch gekennzeichnet, dass** das Stützelement (5) lösbar am Verbindungselement (6b, 6c) befestigt ist, wobei vorzugsweise das Verbindungselement (6b, 6c) eine dritte Ausnehmung (9c) zur Aufnahme des oberen Endes (5a) des Stützelements (5) aufweist.

6. Schutzvorrichtung (1) gemäss einem der Ansprüche 3-5, **dadurch gekennzeichnet, dass** das Stützelement (5) einstückig am Verbindungselement (6b, 6c) angeformt ist.

7. Schutzvorrichtung (1) gemäss einem der Ansprüche 3-6, **dadurch gekennzeichnet, dass** an jedem Kontakt- oder Kreuzungspunkt (8) eines der stabförmigen Elemente (4a) der ersten Reihe (R1) mit einem der stabförmigen Elemente (4b) der zweiten Reihe (R2) des Gitters (2) ein Verbindungselement (6b, 6c) angeordnet ist.

8. Schutzvorrichtung (1) gemäss einem der Ansprüche 3-7, **dadurch gekennzeichnet, dass** ein Abstand zwischen zwei Kontakt- oder Kreuzungspunkten (8) des Gitters (2) im Wesentlichen einer einfachen oder doppelten Länge eines der stabförmigen Elemente (4a, 4b) entspricht.

9. Schutzvorrichtung (1) gemäss einem der Ansprüche 3-8, **dadurch gekennzeichnet, dass** mindestens zwei stabförmige Elemente (4a, 4b) entlang ihrer Längsachse (L4a, L4b) durch jeweils ein Kupplungselement (23) miteinander verbunden sind, wobei das Kupplungselement (23) vorzugsweise rohrhülsenförmig ausgebildet ist und eine axiale Durchgangsöffnung (23a) aufweist, zur Aufnahme eines ersten Endes (4a', 4b') eines ersten stabförmigen Elements (4a, 4b) und eines zweiten Endes (4a", 4b") eines axial benachbarten zweiten stabförmigen Elements (4a, 4b), und wobei das Kupplungselement (23) vorzugsweise eine Längsachse (L23) aufweist, welche im Falle einer Verbindung von zwei stabförmigen Elementen (4a) der ersten Reihe (R1) jeweils entlang der ersten Längsachse (L4a₁-L4aₙ) und im Falle einer Verbindung von zwei stabförmigen Elementen (4b) der zweiten Reihe (R2) jeweils entlang der zweiten Längsachse (L4b₁-L4bₙ) angeordnet ist.

10. Schutzvorrichtung (1) gemäss einem Ansprüche 3-9, **dadurch gekennzeichnet, dass** am unteren Abschnitt (6b") des Verbindungselements (6c) ein Stützelement (5) befestigt ist.

11. Schutzvorrichtung (1) gemäss einem der Ansprüche 3-10, **dadurch gekennzeichnet, dass** das Verbindungselement (6c) einstückig mit dem Stützelement (5) ausgebildet ist.

## Claims

1. Connecting element (6b, 6c) for a protective device against animals, wherein the protective device has a grid (2) composed of a plurality of bar-shaped elements (4a, 4b) which are arranged substantially in a first, upper plane (E1) and which are arranged parallel to a ground surface (3) of a ground portion (7) that extends substantially along a second, lower plane (E2), wherein the grid (2) is arranged spaced apart from the ground surface (3) in a first vertical direction (V1), wherein the grid (2) has a first row (R1) of bar-shaped elements (4a) which each have a first longitudinal axis (L4a₁-L4aₙ) and extend parallel to one another in a first horizontal direction (H1), and wherein the grid (2) has a second row (R2) of bar-shaped elements (4b) which each have a second longitudinal axis (L4b₁-L4bₙ) and extend parallel to one another in a second horizontal direction (H2), wherein the second horizontal direction (H2) is arranged substantially at a right angle to the first horizontal direction (H1), and wherein the first horizontal direction (H1) and the second horizontal direction (H2) are arranged substantially at a right angle to the first vertical direction (V1), **wherein** the connecting element (6b, 6c) is designed to receive at least one first bar-shaped element (4a) of the first row (R1) and at least one first bar-shaped element (4b) of the second row (R2) at at least one crossing point (8) of a first bar-shaped element of the first row (R1) with a first bar-shaped element (4b) of the second row (R2) of the grid (2), wherein the connecting element (6b, 6c) has a first aperture (9a) for receiving a first bar-shaped element (4a) of the first row (R1) and a second aperture (9b) for receiving a bar-shaped element (4b) of the second row (4b); wherein the first aperture (9a) has an axial extent which is arranged at a right angle to an axial extent of the second aperture (9b) such that a first bar-shaped element (4a) of the first row (R1) that is received in the first aperture (9a) and a first bar-shaped element (4b) of the second row (R2) of the grid that is received in the second aperture can cross one another in the connecting element (6b, 6c), **characterized in that** the connecting element (6b) has an upper portion (6b') and a lower portion (6b'), wherein two apertures are arranged in the upper portion (6b') and are designed in the form of a first, upwardly open channel (16) for receiving a first bar-shaped element (4a) along the longitudinal axis (L4b) of the first bar-shaped element (4a) and in the form of a second, upwardly open channel (17), which is arranged at a right angle to the first channel (16), for receiving a second bar-shaped element (4b) along the longitudinal axis (L4b) of the second bar-shaped element (4b), **or in that** the connecting element (6c) has two intersecting plate-shaped elements (18, 19) which are arranged at a right angle to one another and which each have a first through-opening (20) for receiving a first bar-shaped element (4a) of the first row (R1) and which each have a second through-opening (21) for receiving a first bar-shaped element (4b) of the second row (R2).

2. Connecting element (6b, 6c) according to Claim 1, **characterized in that** the connecting element (6b, 6c) in each case has a support element (5) which has a third longitudinal axis (L5) and has a first, upper end (5a) and a second, lower end (5b), wherein the support element (5) extends in a second vertical direction (V2) away from the first plane (E1) towards the second plane (E2) substantially at a right angle to the first plane (E1) and is designed to support the grid (2) on the ground surface (3) or to anchor the protective device (1) in the ground portion (7), and wherein the support element (5) is preferably formed in one piece with the connecting element (6b, 6c).

3. Protective device (1) for protecting a ground portion (7) against animals, having a grid (2) composed of a plurality of bar-shaped elements (4a, 4b) which are arranged in a fist, upper plane (E1), wherein the first, upper plane (E1) is arranged substantially parallel to a second, lower plane (E2) extending substantially along a ground surface (3) of the ground portion (7) and is arranged spaced apart from this second, lower plane (E2) along a first vertical direction (V1), wherein the grid (2) has a first row (R1) of bar-shaped elements (4a) which are arranged parallel to one another and which each have a first longitudinal axis (L4a₁-L4aₙ) and extend in a first horizontal direction (H1), and wherein the grid (2) has a second row (R2) of bar-shaped elements (4b) which are arranged parallel to one another and which each have a second longitudinal axis (L4b₁-L4bₙ) and extend in a second horizontal direction (H2), wherein the second horizontal direction (H2) is arranged substantially at a right angle to the first horizontal direction (H1), and wherein the first horizontal direction (H1) and the second horizontal direction (H2) are arranged in the first plane (E1) and are arranged substantially at a right angle to the first vertical direction (V1), wherein the protective device (1) has at least one support element (5) for supporting the grid (2) on the ground surface (3) or for anchoring the protective device (1) in the ground portion (7), wherein the support element (5) has a first, upper end (5a) and a second, lower end (5b), and wherein the at least one support element (5) extends with a third longitudinal axis (L5) in a second vertical direction (V2) away from the first plane (E1) towards the second plane (E2) of the ground surface (3) substantially at a right angle to the first plane (E1), wherein the protective device (1) has at least one crossing point (8) at which one of the bar-shaped elements (4a) of the first row (R1) crosses with one of the bar-shaped elements (4b) of the second row (R2) of the grid (2), **characterized in that** the protective device (1) further has at least one connecting element (6b, 6c) according to one of Claims 1-2 at the at least one crossing point (8).

4. Protective device (1) according to Claim 3, **characterized in that** the at least one support element (5) is fastened to one of the connecting elements (6b, 6c), wherein the protective device (1) preferably has a plurality of support elements (5), and **in that** each of the support elements (5) is fastened to in each case one of the connecting elements (6b, 6c).

5. Protective device (1) according to one of Claims 3-4, **characterized in that** the support element (5) is releasably fastened to the connecting element (6b, 6c), wherein the connecting element (6b, 6c) preferably has a third aperture (9c) for receiving the upper end (5a) of the support element (5).

6. Protective device (1) according to one of Claims 3-5, **characterized in that** the support element (5) is formed in one piece on the connecting element (6b, 6c).

7. Protective device (1) according to one of Claims 3-6, **characterized in that** a connecting element (6b, 6c) is arranged at each contact or crossing point (8) of one of the bar-shaped elements (4a) of the first row (R1) with one of the bar-shaped elements (4b) of the second row (R2) of the grid (2).

8. Protective device (1) according to one of Claims 3-7, **characterized in that** a distance between two contact or crossing points (8) of the grid (2) substantially corresponds to once or twice the length of one of the bar-shaped elements (4a, 4b).

9. Protective device (1) according to one of Claims 3-8, **characterized in that** at least two bar-shaped elements (4a, 4b) are connected to one another along their longitudinal axis (L4a, L4b) by a coupling element (23) in each case, wherein the coupling element (23) is preferably designed in the form of a tubular sleeve and has an axial through-opening (23a) for receiving a first end (4a', 4b') of a first bar-shaped element (4a, 4b) and a second end (4a", 4b") of an axially adjacent second bar-shaped element (4a, 4b), and wherein the coupling element (23) preferably has a longitudinal axis (L23) which, in the case of a connection of two bar-shaped elements (4a) of the first row (R1), is in each case arranged along the first longitudinal axis (L4a₁-L4aₙ) and, in the case of a connection of two bar-shaped elements (4b) of the second row (R2), is arranged in each case along the second longitudinal axis (L4b₁-L4bₙ).

10. Protective device (1) according to one of Claims 3-9, **characterized in that** a support element (5) is fastened to the lower portion (6b") of the connecting element (6c).

11. Protective device (1) according to one of Claims 3-10, **characterized in that** the connecting element (6c) is formed in one piece with the support element (5).

## Revendications

1. Élément de liaison (6b, 6c) pour un dispositif de protection contre les animaux, le dispositif de protection comportant un grillage (2) composé d'une pluralité d'éléments en forme de piquet (4a, 4b) disposés pour l'essentiel dans un premier plan supérieur (E1), lesdits éléments en forme de piquet étant disposés parallèlement à une surface du sol (3) d'une section de sol (7) qui s'étend pour l'essentiel le long d'un deuxième plan inférieur (E2), le grillage (2) étant disposé à une certaine distance de la surface du sol (3) dans une première direction verticale (V1), le grillage (2) comportant une première rangée (R1) d'éléments en forme de piquet (4a) qui présentent respectivement un premier axe longitudinal (L4a₁-L4aₙ) et s'étendent dans une première direction horizontale (H1) parallèlement les uns par rapport aux autres, et lequel le grillage (2) comportant une deuxième rangée (R2) d'éléments en forme de piquet (4b) qui présentent respectivement un deuxième axe longitudinal (L4_{b1}-L4_{bn}) et s'étendent dans une deuxième direction horizontale (H2) parallèlement les uns par rapport aux autres, la deuxième direction horizontale (H2) étant disposée pour l'essentiel à angle droit par rapport à la première direction horizontale (H1), et la première direction horizontale (H1) et la deuxième direction horizontale (H2) étant disposées pour l'essentiel à angle droit par rapport à la première direction verticale (V1), l'élément de liaison (6b, 6c) étant réalisé de façon à recevoir au moins un premier élément en forme de piquet (4a) de la première rangée (R1) et au moins un premier élément en forme de piquet (4b) de la deuxième rangée (R2) au niveau d'au moins un point d'intersection (8) d'un premier élément en forme de piquet de la première rangée (R1) avec un premier élément en forme de piquet (4b) de la deuxième rangée (R2) du grillage (2), l'élément de liaison (6b, 6c) comportant un premier évidement (9a) de façon à recevoir un premier élément en forme de piquet (4a) de la première rangée (R1) et un deuxième évidement (9b) de façon à recevoir un élément en forme de piquet (4b) de la deuxième rangée (4b) ; le premier évidement (9a) présentant un allongement axial disposé à angle droit par rapport à l'allongement axial du deuxième évidement (9b), de sorte qu'un premier élément en forme de piquet (4a) de la première rangée (R1) logé dans le premier évidement (9a) et un premier élément en forme de piquet (4b) de la deuxième rangée (R2) du grillage logé dans le deuxième évidement peuvent se croiser dans l'élément de liaison (6b, 6c), **caractérisé en ce que** l'élément de liaison (6b) comporte une section supérieure (6b') et une section inférieure (6b'), les deux évidements étant disposés dans la section supérieure (6b'), ces évidements étant réalisés sous la forme d'un premier canal ouvert vers le haut (16) pour le logement d'un premier élément en forme de piquet (4a) le long de l'axe longitudinal (L4b) du premier élément en forme de piquet (4a) et sous la forme d'un deuxième canal ouvert vers le haut (17) disposé à angle droit par rapport au premier canal (16), pour le logement d'un deuxième élément en forme de piquet (4b) le long de l'axe longitudinal (L4b) du deuxième élément en forme de piquet (4b) ou **en ce que** l'élément de liaison (6c) comporte deux éléments (18, 19) en forme de plaque disposés à angle droit l'un par rapport à l'autre et se croisant, lesdits éléments comportant respectivement une première ouverture traversante (20) pour le logement d'un premier élément en forme de piquet (4a) de la première rangée (R1) et respectivement une deuxième ouverture traversante (21) pour le logement d'un premier élément en forme de piquet (4b) de la deuxième rangée (R2).

2. Élément de liaison (6b, 6c) selon la revendication 1, **caractérisé en ce que** l'élément de liaison (6b, 6c) comporte respectivement un élément de support (5) comportant un troisième axe longitudinal (L5) et une première extrémité supérieure (5a) et une deuxième extrémité inférieure (5b), l'élément de support (5) s'étendant dans une deuxième direction verticale (V2) par rapport au premier plan (E1) de façon à s'écarter du deuxième plan (E2) pour l'essentiel à angle droit par rapport au premier plan (E1) et à supporter le grillage (2) sur la surface du sol (3) ou à ancrer le dispositif de protection (1) dans la section de sol (7), l'élément de support (5) étant réalisé de préférence d'un seul tenant avec l'élément de liaison (6b, 6c).

3. Dispositif de protection (1) d'une section de sol (7) contre les animaux, comportant un grillage (2) composé d'une pluralité d'éléments en forme de piquet (4a, 4b) disposés dans un premier plan supérieur (E1), le premier plan supérieur (E1) étant disposé pour l'essentiel parallèlement à un deuxième plan inférieur (E2) qui s'étend pour l'essentiel le long d'une surface du sol (3) de la section de sol (7) et est disposé à une certaine distance de ce deuxième plan inférieur (E2) le long d'une première direction verticale (V1), le grillage (2) comportant une première rangée (R1) d'éléments en forme de piquet (4a) disposés parallèlement les uns par rapport aux autres qui présentent respectivement un premier axe longitudinal (L4a₁-L4aₙ) et s'étendent dans une première direction horizontale (H1), et le grillage (2) comportant une deuxième rangée (R2) d'éléments en forme de piquet (4b) disposés parallèlement les uns par rapport aux autres qui présentent respectivement un deuxième axe longitudinal (L4_{b1}-L4_{bn}) et s'étendent dans une deuxième direction horizontale (H2), la deuxième direction horizontale (H2) étant disposée pour l'essentiel à angle droit par rapport à la première direction horizontale (H1), et la première direction horizontale (H1) et la deuxième direction horizontale (H2) étant disposées dans le premier plan (E1) et étant disposées pour l'essentiel à angle droit par rapport à la première direction verticale (V1), le dispositif de protection (1) comportant au moins un élément de support (5) pour supporter le grillage (2) sur la surface du sol (3) ou pour ancrer le dispositif de protection (1) dans la section de sol (7), l'élément de support (5) comportant une première extrémité supérieure (5a) et une deuxième extrémité inférieure (5b) et l'au moins un élément de support (5) s'étendant avec un troisième axe longitudinal (L5) dans une deuxième direction verticale (V2) par rapport au premier plan (E1) de façon à s'écarter du deuxième plan (E2) de la surface du sol (3) pour l'essentiel à angle droit par rapport au premier plan (E1), le dispositif de protection (1) comportant au moins un point d'intersection (8) dans lequel un des éléments en forme de piquet (4a) de la première rangée (R1) se croise avec un des éléments en forme de piquet (4b) de la deuxième rangée (R2) du grillage (2), **caractérisé en ce que** le dispositif de protection (1) comporte en outre au moins un élément de liaison (6b, 6c) selon l'une quelconque des revendications 1-2 au niveau d'au moins un point d'intersection (8).

4. Dispositif de protection (1) selon la revendication 3, **caractérisé en ce que** l'au moins un élément de support (5) est fixé à un des éléments de liaison (6b, 6c), le dispositif de protection (1) comportant de préférence une pluralité d'éléments de support (5) et **en ce que** chacun des éléments de support (5) est respectivement fixé à un des éléments de liaison (6b, 6c).

5. Dispositif de protection (1) selon l'une quelconque des revendications 3-4, **caractérisé en ce que** l'élément de support (5) est fixé de façon amovible à l'élément de liaison (6b, 6c), l'élément de liaison (6b, 6c) comportant de préférence un troisième évidement (9c) de façon à recevoir l'extrémité supérieure (5a) de l'élément de support (5).

6. Dispositif de protection (1) selon l'une quelconque des revendications 3-5, **caractérisé en ce que** l'élément de support (5) est formé d'un seul tenant au niveau de l'élément de liaison (6b, 6c).

7. Dispositif de protection (1) selon l'une quelconque des revendications 3-6, **caractérisé en ce qu'**un élément de liaison (6b, 6c) est disposé au niveau de chaque point de contact ou d'intersection (8) d'un des éléments en forme de piquet (4a) de la première rangée (R1) avec un des éléments en forme de piquet (4b) de la deuxième rangée (R2) du grillage (2).

8. Dispositif de protection (1) selon l'une quelconque des revendications 3-7, **caractérisé en ce qu'**une distance entre deux points de contact ou d'intersection (8) du grillage (2) correspond pour l'essentiel à une longueur ou une double longueur d'un des éléments en forme de piquet (4a, 4b).

9. Dispositif de protection (1) selon l'une quelconque des revendications 3-8, **caractérisé en ce qu'**au moins deux éléments en forme de piquet (4a, 4b) sont reliés entre eux le long de leur axe longitudinal (L4a, L4b) au travers respectivement d'un élément de couplage (23), l'élément de couplage (23) étant réalisé de préférence en forme de fourreau tubulaire et présentant une ouverture traversante axiale (23a), de façon à recevoir une première extrémité (4a', 4b') d'un premier élément en forme de piquet (4a, 4b) et une deuxième extrémité (4a", 4b") d'un deuxième élément en forme de piquet (4a, 4b) qui est axialement adjacent, l'élément de couplage (23) présentant de préférence un axe longitudinal (L23) disposé respectivement le long du premier axe longitudinal (L4ₐ₁-L4ₐₙ) en cas de liaison de deux éléments en forme de piquet (4a) de la première rangée (R1) et respectivement le long du deuxième axe longitudinal (L4_{b1}-L4_{bn}) en cas de liaison de deux éléments en forme de piquet (4b) de la deuxième rangée (R2).

10. Dispositif de protection (1) selon l'une quelconque des revendications 3-9, **caractérisé en ce qu'**un élément de support (5) est fixé à la section inférieure (6b") de l'élément de liaison (6c).

11. Dispositif de protection (1) selon l'une quelconque des revendications 3-10, **caractérisé en ce que** l'élément de liaison (6c) est réalisé d'un seul tenant avec l'élément de support (5).
